Europäisches Patentamt

European Patent Office

Office européen des brevets

(19)

(11) Veröffentlichungsnummer: **0 260 337 B1**

(12) # EUROPÄISCHE PATENTSCHRIFT

(45) Veröffentlichungstag der Patentschrift:
28.06.89

(51) Int. Cl.⁴: **G01L 5/00**, G01L 1/16

(21) Anmeldenummer: 86112831.2

(22) Anmeldetag: 18.09.86

(54) Kraftmessvorrichtung mit einem elektromechanischen Wandler.

(43) Veröffentlichungstag der Anmeldung:
23.03.88 Patentblatt 88/12

(45) Bekanntmachung des Hinweises auf die Patenterteilung:
28.06.89 Patentblatt 89/26

(84) Benannte Vertragsstaaten:
AT CH DE FR GB LI SE

(56) Entgegenhaltungen:
DE-A- 2 700 342
DE-A- 3 407 618

(73) Patentinhaber: Kistler Instrumente AG,
Eulachstrasse 22, CH-8408 Winterthur(CH)

(72) Erfinder: Wolfer, Peter, Alte Steinerstrasse 9,
CH-8450 Kleinandelfingen(CH)
Erfinder: Schaffner, Georges, Schönbüelstrasse 32A,
CH-8330 Pfäffikon(CH)
Erfinder: Schmid, Jean-Jacques, Feldstrasse 43,
CH-8330 Phäffikon(CH)

(74) Vertreter: Schmidt, Horst, Dr., Siegfriedstrasse 8,
D-8000 München 40(DE)

## Beschreibung

Die Erfindung betrifft eine Messvorrichtung mit einem elektromechanischen Wandler zur Messung der Kraftwirkungen in einem mechanisch belasteten Maschinenteil oder dgl., welche in einer Bohrung des Maschinenteils einsetzbar und darin unter gleichzeitigem Vorspannen des Wandlers kraftschlüssig verspannbar ist.

Messvorrichtungen mit elektromechanischen Wandlern sind an sich bekannt (US-A- 4 412 456, DE-A- 34 07 620). Sie dienen vornehmlich zur Erfassung von Teilkräften bzw. Materialdehnungen in einem mechanisch belasteten Maschinenteil und liefern ein elektrisches Signal, welches ein Mass für die auf das Maschinenteil einwirkende Kraft darstellt. Piezoelektrische Wandler, insbesondere solche mit Quarzkristallelementen, finden dank ihrer hohen Empfindlichkeit bevorzugt Anwendung in derartigen Messvorrichtungen, da diese auch an Stellen eingesetzt werden können, wo nur verhältnismässig geringe Teilkräfte auftreten.

In der DE- A-34 07 620 ist eine Messvorrichtung mit einem piezoelektrischen Wandler beschrieben, die in der oben beschriebenen Weise in die Bohrung eines Maschinenteils eingesetzt und darin verspannt werden kann. Sie besitzt zwei koaxial angeordnete, teilweise längsgeschlitzte, in Axialrichtung relativ zueinander bewegbare Hülsen, die nach Art eines Spreizdübels zusammenwirken. Dazu ist an dem in der Bohrung tiefer liegenden Ende der inneren Hülse eine Konusfläche vorgesehen, die gegen die andere Hülse drückt. Die Innenhülse weist im Bereich der Konusfläche zwei planparallele Flächen auf, zwischen denen der piezoelektrische Wandler eingespannt ist. Beim Ineinanderschieben der beiden Hülsen werden die durch Längsschlitze geteilten Schenkel der Aussenhülse infolge der Keilwirkung an der Konusfläche gespreizt, wodurch die Messvorrichtung an der Bohrungswandung kraftschlüssig festgelegt wird. Zugleich wird der piezoelektrische Wandler zwischen den Planflächen an den durch Längsschlitze geteilten Schenkeln der Innenhülse vorgespannt. Ferner weist die Aussenhülse einen Kopf auf, der entweder an der Aussenseite des Maschinenteils auzuliegen bestimmt ist oder in eine Erweiterung der Bohrungsmündung zu liegen kommt und als Gegenlager für eine Spannmutter dient.

Die Konstruktion dieser Messvorrichtung ist verhältnismässig kompliziert und aufwendig in bezug auf Material und Herstellung. Z.B. erfordert die Fassung des piezoelektrischen Wandlers planparallele Flächen an der Innenseite der Innenhülse. Für eine einwandfreie Krafteinleitung unter Vermeidung eines Kraftnebenschlusses und von Biegemomenten müssen die die Planflächen aufweisenden Schenkel der Innenhülse sehr elastisch und beispielsweise verhältnismässig lang sein, wobei die Länge der Längsschlitze die Gesamtlänge der Messvorrichtung mitbestimmt. Die Aussenhülse ist wegen des vorgesehenen Kopfes aus massivem Material herauszuarbeiten.

Die Anordnung des piezoelektrischen Wandlers zwischen planparallelen Flächen der Innenhülse ist insofern nachteilig, als eine definierte Lage der Wirkungslinie der in den Wandler einzuleitenden Kraft kaum zu erreichen ist. Falls diese Wirkungslinie exzentrisch bzw. schiefwinklig zur Wandlerachse verläuft, treten Biegemomente auf, welche die Arbeitsweise des Wandlers unter Umständen erheblich beeinträchtigen können. Bei den Ausführungsformen nach der DE-A- 34 07 620 hängt die relative Lage der Wirkungslinie der Krafteinleitung von verschiedenen Masstoleranzen ab. Einerseits hat der Wandler keine definierte Lage in Richtung der Längsachse der Messvorrichtung, und andererseits ist die relative Lage der beiden Hülsen in axialer Richtung nicht definiert, was bei der Konstruktion mit an der Innenhülse vorgesehener Konusfläche zur Folge hat, dass die axiale Lage des auf die Konusfläche drückenden, die Krafteinleitung auf die Innenhülse bewirkenden Randes der Aussenhülse je nach den Abweichungen vom Sollwert der massgeblichen Abmessungen der beiden Hülsen im Konusbereich variieren kann.

In der DE-A- 34 07 620 ist auch eine Ausführungsform beschrieben, bei der als Gewindeverbindung eine Madenschraube vorgesehen ist, welche in ein Innengewinde der Aussenhülse eingeschraubt ist und zur Erzeugung der axialen Spannkraft auf die Innenhülse drückt. Bei dieser Konstruktion ist die Drehwinkellage des Wandlers unbestimmt und von aussen nicht kontrollierbar.

Zur Entfernung der Messvorrichtung aus der Bohrung im Falle eines notwenig werdenden Ersatzes oder zum Versetzen der Messvorrichtung innerhalb der Bohrung von einer Drehwinkellage in eine andere, muss die Verspannung der Messvorrichtung leicht lösbar sein. Unter anderem ist die Möglichkeit, die Messvorrichtung versetzen zu können, dann erwünscht, wenn die Richtung der Kraftwirkung im Maschinenteil vorab nicht oder nur ungenau bekannt ist und der Wandler vor der endgültigen Fixierung der Messvorrichtung durch mehrfaches Vorfixieren in verschiedenen Drehwinkellagen auf maximales Ausgangssignal eingestellt werden soll. Bei selbsthemmender Verspannung ist das Lösen derselben bei den bekannten Ausführungen nur möglich durch eine Schlagwirkung auf die Innenhülse, und auch nur dann, wenn das den Schlag aufnehmende Ende der Innenhülse zugänglich ist. Dieses Verfahren kann allerdings den Wandler gefährden. Für eine nicht selbsthemmende Verspannung ist demgegenüber ein kleineres Uebersetzungsverhältnis in bezug auf die Kraftumsetzung an der Konusfläche in Kauf zu nehmen, so dass an der Gewindeverbindung zwischen den beiden Hülsen höhere Spannkräfte aufzubringen sind.

Die Erfindung bezweckt demgegenüber die Schaffung einer Messvorrichtung der eingangs genannten Art, welche die beschriebenen Nachteile nicht aufweist, einfacher und kompakter aufgebaut und kostengünstiger herstellbar ist, den Einsatz handelsüblicher, serienmässig hergestellter Quarzkristall-Wandler in Miniaturausführung ermöglicht und in jeder gewünschten Axial- und Drehwinkellage innerhalb einer Bohrung montiert werden kann.

Die erfindungsgemäße Messvorrichtung zeichnet sich dadurch aus, dass die Vorrichtung als äussere Begrenzung eine im wesentlichen zylindrische Hülse aufweist, die an einem Ende mit einem Innenkonus versehen ist, dass der Wandler mit einer in der Hülse koaxial angeordneten Schraubspindel verbunden ist, dass eine mit der Schraubspindel zu deren axialen Bewegung in Eingriff stehende Schraubeinrichtung im Innern der Hülse axial unverschieblich drehbar gehalten ist, und dass der Wandler diametral gegenüberliegende Krafteinleitungselemente aufweist, welche mit dem Innenkonus der Hülse zu deren verspannenden Spreizung unmittelbar in Eingriff bringbar sind.

Gemäss einer bevorzugten Weiterbildung der Erfindung sind eine Einrichtung zum Halten der Vorrichtung in einer bestimmten Axial- und/oder Drehwinkellage gegenüber der Bohrung und eine Einrichtung zum Betätigen der Schraubeinrichtung vorgesehen, welche Einrichtungen die radiale Abmessung der Hülse im wesentlichen nicht überschreiten.

Gemäss einer anderen bevorzugten Weiterbildung der Erfindung umfasst jedes Krafteinleitungselement einen vom Wandler im wesentlichen radial abstehenden Druckkörper mit einer im wesentlichen kugelkalottenförmigen, mit dem Innenkonus der Hülse in Eingriff stehenden Stirnfläche.

Der für den Einsatz in der erfindungsgemässen Messvorrichtung vorgesehene elektromechanische Wandler ist vorzugsweise ein piezoelektrischer Wandler, bei dem die Wandlerelemente z.B. in Form vom Quarzkristallplättchen mit diese zwischen sich aufnehmenden Druckkörpern in einem hermetisch geschlossenen Gehäuse angeordnet sind, das einen rohrförmigen Befestigungsansatz mit Aussengewinde aufweist, durch den die elektrische Verbindungsleitung von den Wandlerelementen nach aussen geführt ist. Die einen Teil des Gehäuses bildenden Druckkörper haben an der die Krafteinleitungsfläche bildenden Aussenseite entweder die Form einer Kugelkalotte, oder sie besitzen planparallele Krafteinleitungsflächen, auf die Kugelkalotten aufgesetzt werden. Als Variante kann auch ein elektromechanischer Wandler anderer Art, z.B. ein piezoresistiver Wandler vorgesehen sein.

Für die Befestigung des Wandlers an der Schraubenspindel kann die zweckmässigerweise hohl ausgeführte Schraubenspindel am wandlerseitigen Ende mit einem Innengewinde versehen sein, mit dem die Schraubspindel am Befestigungsansatz des Wandlergehäuses festgeschraubt werden kann.

Die Hülse kann aus gezogenem Rohr hergestellt werden. Die erforderlichen Arbeitsgänge beschränken sich im wesentlichen auf das Ausreiben des Innenkonus und die Vorbereitung der Lagerstellen für die beidseitige axiale Fixierung der Bewegungsmutter, welche für die axiale Verschiebung der Schraubspindel vorgesehen ist. Im Bedarfsfall kann die Hülse zusätzlich mit wenigstens über die Länge des Innenkonus sich erstreckenden Längsschlitzen versehen sein. Zur axialen beidseitigen Lagerung der Bewegungsmutter können an der Hülse in Ringnuten eingesetzte Sprengringe vorgesehen sein. Die Hülse kann unter diesen Umständen verhältnismässig dünnwandig sein, z.B. eine Wandstärke von 1 mm aufweisen, insbesondere wenn der Anzug des Innenkonus gering ist, z.B. 1 : 10. Bei grösserem Anzug des Innenkonus und entsprechend grösserer Wandstärke der Hülse kann die dem Innenkonus näher liegende Lagerstelle auch durch eine in der Hülse vorgesehene Schulter gebildet sein.

Die Krafteinleitung in den elektromechanischen Wandler erfolgt über Kugelkalotten, welche mit dem Innenkonus der Hülse unmittelbar zusammenwirken. Einerseits wird dadurch eine eindeutige, von Masstoleranzen weitgehend unabhängige Krafteinleitung erreicht, und andererseits ist bei dieser Konstruktion der auf ein Mindestmass zu beschränkende Durchmesser der Messvorrichtung im wesentlichen nur durch die radialen Abmessungen des Wandlers bestimmt.

Die unmittelbare Einwirkung des Innenkonus der Hülse auf die Kugelkalotten des piezoelektrischen Wandlers bringt es mit sich, dass die Wirkungslinie der Krafteinleitung nicht genau mit der geometrischen Achse des Wandlers zusammenfällt. Diese von der idealen abweichende Form der Krafteinleitung hat jedoch auf die Wirkungsweise des Wandlers einen nur unbedeutenden Einfluss, sofern der Anzug des Innenkonus nicht übermässig gross ist. Es hat sich gezeigt, dass die zu erwartenden Biegemomente bei einem Innenkonus mit einem Anzug von höchstens 1 : 5 die Wandlereigenschaften nicht beeinträchtigen. Allfällige Schubkräfte werden normalerweise vom Wandlergehäuse aufgenommen und gehen nicht in die Messung ein.

Andererseits besteht die Möglichkeit, mit ein und derselben Messvorrichtung sowohl Druckkräfte als auch tangential gerichtete Schubkräfte separat zu erfassen. Dazu ist ein Wandler einzusetzen, der sowohl Wandlerelemente zur Erfassung von Druckkräften als auch Wandlerelemente zur Erfassung von Schubkräften aufweist und bei dem im Gegensatz zu dem vorher beschriebenen Wandler die eingeleiteten Schubkräfte auf die betreffenden Wandlerelemente übertragen werden. Piezoelektrische Wandler dieser Art sind an sich bekannt und bedürfen daher keiner weiteren Erläuterung.

Die vorgeschlagene einfache Konstruktion erlaubt es, die Messvorrichtung mit verhältnismässig geringem Aufwand in der gewünschten Miniaturausführung herzustellen. Diese Messvorrichtung benötigt keine Mittel zu ihrer Verankerung an der Mündung der zu ihrem Einsatz vorgesehenen Bohrung in einem Maschinenteil. Sie ist vielmehr geeignet für eine sogenannte Tieflochmontage und kann in jeder beliebigen Tiefenlage innerhalb der Bohrung fixiert werden. Ferner verfügt sie über Mittel in Form der beidseitig axial gela gerten Bewegungsmutter, die es ermöglichen, nach einer Fixierung der Messvorrichtung die Konusverbindung leicht wieder zu lösen, so dass die Messvorrichtung den jeweiligen Erfordernissen entsprechend versetzt werden kann.

Für die Montage der Messvorrichtung sind Mittel zum Halten derselben in einer bestimmten Axial- und Drehwinkellage innerhalb einer Bohrung und Mittel zum Betätigen der Bewegungsmutter vorhanden. Diese Mittel können z.B. darin bestehen, dass die Bewegungsmutter einen koaxial zylindrischen Ansatz aufweist, der über das äussere Axiallager der Bewegungsmutter hinausragt und der einen radialen Zapfen trägt, an den ein Hilfswerkzeug zum Verschieben der Messvorrichtung in axialer Richtung und zum Verdrehen der Bewegungsmutter ansetzbar ist, und dass am äusseren Ende der Schraubspindel wenigstens eine plane Angriffsfläche vorgesehen ist, die das Ansetzen eines Hilfswerkzeuges zum Fixieren der Drehwinkellage der Schraubspindel und damit des Wandlers ermöglicht. Als Hilfswerkzeuge eignen sich zwei koaxiale, ineinander verschieb- und verdrehbare Rohre, die in die Bohrung einführbar sind und die am einen Ende Betätigungsgriffe und am anderen Ende Formteile aufweisen, die mit den betreffenden Stellelementen an der Messvorrichtung zum Eingriff gebracht werden können.

Um die Wirkung des über die Bewegungsmutter verlaufenden Kraftnebenschlusses zu vermindern, kann die Bewegungsmutter aus einem Material bestehen, dessen Elastizitätsmodul geringer ist als der des elektromechanischen Wandlers, z.B. aus einer Aluminiumlegierung oder aus Kunststoff. Diese Massnahme führt auch zu einer Dämpfung der Eigenresonanzen des Wandlers.

Bei den handelsüblichen piezoelektrischen Wandlern ist normalerweise die mit der Wandlermasse verbundene elektrische Leitung isoliert herausgeführt und jeweils am Gerät zur Auswertung der elektrischen Wandlersignale geerdet. Damit den Messvorgang störende Erdungsschlaufen vermieden werden, muss die Wandlermasse in bezug auf die Umgebungsmasse, insbesondere gegenüber der die Messvorrichtung im Einsatz umgebenden Bohrungswandung elektrisch isoliert sein. Im einfachsten Fall kann man dazu für die Messvorrichtung eine Hülse verwenden, die wenigstens an ihrer Aussenseite aus elektrisch nicht leitendem Material besteht, also beispielsweise mit einer Oberflächenschicht aus Aluminiumoxid versehen ist. Andere Möglichkeiten zur Masseisolation ergeben sich auf der Basis des Anspruches 15.

Die an den Wandler anschliessende Messelektronik und Auswertungslogik, beispielsweise umfassend Verstärker, Analog-Digital-Wandler, programmierbare Speicher, können teilweise oder ganz in das auch den Wandler enthaltende Gehäuse und/oder das daran anschliessende Ansatzrohr untergebracht und dadurch in die Messvorrichtung integriert werden. Diese Integration bietet Vorteile speziell bei Anwendungen, bei denen eine kompakte Bauweise des einen mechanischen und einen elektronischen Teil umfassenden Gesamtsystems und eine geringe Anfälligkeit für Störsignale, z.B. elektromagnetischer Art, wichtig sind. Dies ist der Fall beispielsweise in einem Maschinenraum.

In der Zeichnung sind Ausführungsbeispiele der Erfindung dargestellt, und zwar zeigen:

Fig. 1 eine erste Ausführungsform der in eine Bohrung eines Maschinenteils eingesetzten Messvorrichtung, zur Hälfte in Ansicht und zur Hälfte im Längsschnitt;

Fig. 2 eine Stirnansicht der Messvorrichtung nach Fig. 1 in Richtung des Pfeiles A in Fig. 1;

Fig. 3 eine Stirnansicht der Messvorrichtung nach Fig. 1 in Richtung des Pfeiles B in Fig. 1; und

Fig. 4 eine zweite Ausführungsform der Messvorrichtung, zur Hälfte in Ansicht und zur Hälfte im Längsschnitt.

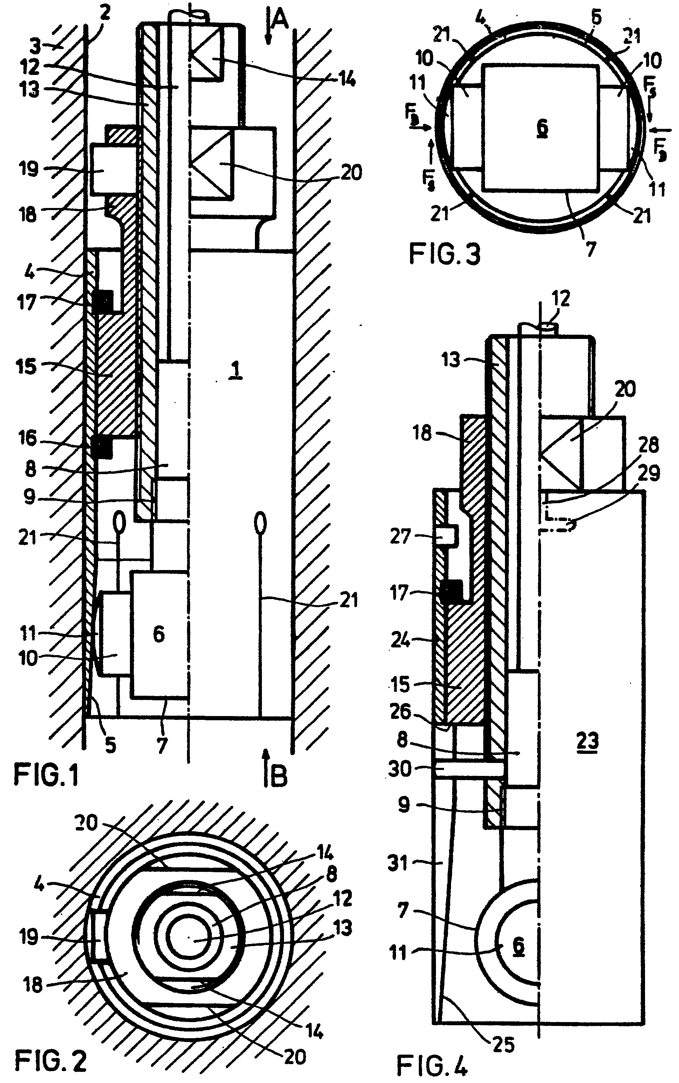

Die Messvorrichtung 1, welche nach Fig. 1 in eine zylindrische Bohrung 2 in einem zu überwachenden, mechanisch belasteten Maschinenteil 3, z.B. in einem Werkzeugmaschinentisch eingesetzt ist, hat als äussere Begrenzung eine dünnwandige zylindrische Hülse 4, welche an ihrem einen Ende mit einem Innenkonus 5 versehen ist. Der elektromechanische Wandler 6 besteht aus einem die Wandlerelemente, z.B. Quarzkristallplättchen, enthaltenden, hermetisch verschlossenen Gehäuse 7, an das sich ein rohrförmiger Befestigungsansatz 8 mit Aussengewinde 9 anschliesst, und zwei einander diametral gegenüberliegenden Druckkörpern 10 mit je einer Kugelkalotte 11 zur Krafteinleitung. Die Kugelkalotten 11 können an den Druckkörpern 10 ausgebildet oder auf diese aufgesetzt sein. Der Radius der Kugelkalotten 11 ist vorzugsweise gleich gross wie der Radius des Innenkonus 5 der Hülse 4 an der engsten Stelle. Durch den Hohlraum des Befestigungsansatzes 8 ist die elektrische Verbindungsleitung 12 von den Wandlerelementen nach aussen geführt. Piezoelektrische Wandler dieser Art sind als Serienfabrikat handelsüblich. Das Gehäuse 7 und/oder der Ansatz 8 können überdies, wie bereits erwähnt, die Messelektronik und Auswertungslogik teilweise oder ganz enthalten. Innerhalb der Hülse 4 ist eine Schraubspindel 13 koaxial angeordnet, welche auf das Aussengewinde 9 des Befestigungsansatzes 8 aufgeschraubt und so mit dem Wandler 6 fest verbunden ist. Am freien Ende der Schraubspindel 13 sind zwei planparallele Angriffsflächen 14 zum Ansetzen eines Hilfswerkzeuges (nicht dargestellt), z.B. in Form eines Steckschlüssels, vorgesehen, womit die Schraubspindel 13 von aussen in einer bestimmten Drehwinkellage gehalten werden kann. Zur axialen Verschiebung der Schraubspindel 13 ist eine auf diese aufgeschraubte Bewegungsmutter 15 vorgesehen, die an der Innenseite der Hülse 4 radial geführt und axial beidseitig gelagert ist. Als Axiallager dienen bei der ersten Ausführungsform der Messvorrichtung zwei in Ringnuten an der Hülse 4 eingesetzte Sprengringe 16 und 17. Die Bewegungsmutter 15 weist einen zylindrischen Ansatz 18 auf, der über das äussere Axiallager 17 hinausragt. Dieser Ansatz 18 trägt einen radialen Zapfen 19, an den ein Hilfswerkzeug (nicht dargestellt) zum Verschieben der Messvorrichtung in axialer Richtung und zum Verdrehen der Bewegungsmutter ansetzbar ist. Dieses Hilfswerkzeug kann ein Rohr mit einem Längsschlitz sein, das an der Ansatzstelle zwei wahlweise benützbare Querschlitze zum Erfassen des Zapfens 19 aufweist, die sich vom Längsschlitz aus nach beiden Seiten erstrecken. Am Ansatz 18 der Bewegungsmutter 15 sind ausserdem zwei planparallele Angriffsflächen 20 für das Ansetzen eines anderen Hilfswerkzeuges vorgesehen, das verwendet werden kann, wenn der Ansatz 18 in der Betriebslage der Messvorrichtung aus der Bohrung 2 herausragt.

Durch Verdrehen der Bewegungsmutter 15 lässt sich die mit dem Hilfswerkzeug gegen Verdrehung gesicherte Schraubspindel 13 axial so verschieben, dass der Wandler 6 in die Hülse 4 hineingezogen und im Bereich des Innenkonus 5 verspannt wird, wobei die Kugelkalotten 11 des Wandlers 6 mit dem Innenkonus 5 der Hülse 4 unmittelbar zusammenwirken. Auf diese Weise wird sowohl die gesamte Messvorrichtung innerhalb der Bohrung 2 durch Reibungsschluss zwischen Hülse 4 und Bohrungswandung axial fixiert als auch der Wandler 6 vorgespannt. Bei einer dünnwandigen, z.B. aus gezogenem Stahlrohr hergestellten Hülse kann deren Formelastizität unter Umständen ausreichen, um die nur an zwei diametralen Stellen auf den Innenkonus 5 ausgeübte Spannkraft ohne übermässigen Kraftaufwand an der Bewegungsmutter 15 nach aussen zu übertragen. Immerhin besteht die Möglichkeit, die Elastizität der Hülse im Konusbereich durch Längsschlitze 21, welche sich wenigstens über die Länge des Innenkonus 5 erstrecken, in an sich bekannter Weise zu erhöhen. Dabei soll die Breite der Längsschlitze 21 klein sein im Verhältnis zum Radius der Kugelkalotten 11 des Wandlers 6, damit sie keine Rasten für die Kugelkalotten bilden. Durch Verdrehen der Bewegungsmutter 15 in umgekehrter Drehrichtung kann die Verspannung der Messvorrichtung ohne weiteres wieder gelöst werden.

Die zweite Ausführungsform der Messvorrichtung 23 gemäss Fig. 4 unterscheidet sich von der zuvor beschriebenen dadurch, dass, ausgehend von einer etwas dickwandigeren Hülse 24, das dem Innenkonus 25 näher liegende Axiallager der Bewegungsmutter 15 durch eine Schulter 26 an der Hülse 24 gebildet ist und dass andere Mittel zum Setzen der Messvorrichtung vorgesehen sind. Die übrigen Teile der Messvorrichtung stimmen im wesentlichen mit denjenigen nach den Fig. 1 bis 3 überein und sind mit gleichen Bezugszeichen versehen.

Zum Verschieben der Messvorrichtung 23 in axialer Richtung und zum Fixieren der Drehwinkellage des Wandlers 6 weist die Hülse 24 an ihrem dem Innenkonus 25 abgewandten Ende einen radialen Zapfen 27 auf, an den ein Hilfswerkzeug ansetzbar ist, das grundsätzlich gleich ausgebildet sein kann wie dasjenige zum Erfassen des Zapfens 19 bei der ersten Ausführungsform nach den Fig. 1 bis 3. Als Alternative dazu ist auch eine Umkehr der Formen von Hilfswerkzeug und Stellmittel möglich. Die Hülse 24 hat in diesem Fall einen vom Hülsenrand ausgehenden Längsschlitz 28 und zwei von diesem ausgehende, nach beiden Seiten sich erstreckende Querschlitze 29 (strichpunktiert dargestellt), während das Hilfswerkzeug über einen radialen Zapfen zum Einführen in diese Schlitze verfügt. Die Schraubspindel 13 mit dem Wandler 6 ist gegen ein Verdrehen gegenüber der Hülse 24 durch einen Stift 30 gesichert, der am wandlerseitigen Ende der Schraubspindel 13 radial eingesetzt und in einem Längsschlitz 31 der Hülse 24 geführt ist. Analog zur ersten Ausführungsform sind an einem zylindrischen Ansatz 18 der Bewegungsmutter 15 zwei planparallele Angriffsflächen 20 vorgesehen, die das Ansetzen eines Hilfswerkzeuges zum Verdrehen der Bewegungsmutter 15 ermöglichen. Im Gegensatz zu den bei der ersten Ausführungsform erforderlichen Hilfswerkzeugen kann im vorliegenden Fall das Hilfswerkzeug zum Verdrehen der Bewegungsmutter 15 innerhalb desjenigen zum Halten der Messvorrichtung angeordnet sein. Dies erleichtert die Handhabung der Hilfswerkzeuge, da bei dieser Lösung die Handgriffe des Drehwerkzeuges ausserhalb der jenigen des Haltewerkzeuges zu liegen kommen.

In beiden dargestellten Ausführungsformen sind die an der Messvorrichtung angeordneten Mittel zum Einsetzen derselben in eine Bohrung so ausgebildet, dass die radiale Ausdehnung derselben den Aussendurchmesser der Hülse nicht überschreitet. Damit eignet sich die Messvorrichtung auch für eine Tieflochmontage. Zur Bestimmung der Tiefenlage kann das zum Halten der Messvorrichtung bestimmte Hilfswerkzeug an seiner Aussenseite mit einer Längenmassskala versehen sein.

Als Alternative zu den dargestellten Ausführungsformen kann der Innenkonus der Hülse auch in umgekehrter Richtung verlaufen, d.h. seine engste Stelle an Ende der Hülse haben und sich nach innen erweitern.

Wie eingangs erwähnt, kann die Isolierung des elektromechanischen Wandlers gegen Masse auf verschiedene Weise vorgenommen werden. Beispielsweise kann die Hülse wenigstens an der Aussenwandung eine verschleissfeste Schicht aus einem elektrisch nicht leitenden Material (z.B. Aluminiumoxid) aufweisen. Eine andere Möglichkeit besteht darin, dass die Kugelkalotten auf die Druckkörper des Wandlers aufgesetzt sind und entweder aus elektrisch nicht leitendem Material bestehen oder durch einen elektrisch nicht leitenden Kleber mit den Druckkörpern verbunden sind, und dass die Bewegungsmutter wenigstens an ihrer Aussenseite aus einem elektrisch nicht leitenden Material besteht. ·

Die Messvorrichtung kann auch dort zum Einsatz kommen, wo es darum geht, ausser Druckkräften $F_D$ tangentiale Schubkräfte $F_S$ (Fig. 3) aufzunehmen und diese einzeln zu messen. Wie bereits erwähnt, ist dazu ein elektromechanischer Wandler vorzusehen, der für die separate Erfassung von Druck- und Schubkräften eingerichtet ist. Ausserdem ist in diesem Fall eine Hülse mit Längsschlitzen im Konusbereich zu verwenden.

## Patentansprüche

1. Messvorrichtung (1, 23) mit einem elektromechanischen Wandler (6) zur Messung der Kraftwirkungen in einem mechanisch belasteten Maschinenteil (3) oder dgl., welche in einer Bohrung (2) des Maschinenteils (3) einsetzbar und darin unter gleichzeitigem Vorspannen des Wandlers (6) kraftschlüssig verspannbar ist, dadurch gekennzeichnet, dass die Vorrichtung (1,23) als äussere Begrenzung eine im wesentlichen zylindrische Hülse (4,24) aufweist, die an einem Ende mit einem Innenkonus (5,25) versehen ist, dass der Wandler (6) mit einer in der Hülse koaxial angeordneten Schraubspindel (13) verbunden ist, dass eine mit der Schraubspindel zu deren axialen Bewegung in Eingriff stehende Schraubeinrichtung (15) im Innern der Hülse axial unverschieblich drehbar gehalten ist, und dass der Wandler diametral gegenüberliegende Krafteinleitungselemente (10,11) aufweist, welche mit dem Innenkonus (5,25) der Hülse zu deren verspannenden Spreizung unmittelbar in Eingriff bringbar sind.

2. Messvorrichtung nach Anspruch 1, dadurch gekennzeichnet, daß eine Einrichtung (14,17) zum Halten der Vorrichtung in einer bestimmten Axial- und/oder Drehwinkellage gegenüber der Bohrung und eine Einrichtung (19,20) zum Betätigen der Schraubeinrichtung (15) vorgesehen sind, welche Einrichtungen die radiale Abmessung der Hülse (4,24) im wesentlichen nicht überschreiten.

3. Messvorrichtung nach Anspruch 1 oder 2, dadurch gekennzeichnet, dass jedes Krafteinleitungselement einen vom Wandler (6) im wesentlichen radial abstehenden Druckkörper (10) mit einer im wesentlichen kugelkalottenförmigen, mit dem Innenkonus (5,25) der Hülse (4,24) in Eingriff stehenden Stirnfläche (11) umfasst.

4. Messvorrichtung nach einem der vorhergehenden Ansprüche dadurch gekennzeichnet, dass sie einen piezoelektrischen Wandler aufweist.

5. Messvorrichtung nach einem der vorhergehenden Ansprüche, dadurch gekennzeichnet, dass sie einen elektromechanischen, insbesondere piezoelektrischen Wandler aufweist, der für die separate Erfassung sowohl von Druckkräften als auch von tangential gerichteten Schubkräften eingerichtet ist.

6. Messvorrichtung nach einem der vorhergehenden Ansprüche, dadurch gekennzeichnet, dass die Hülse (4; 24) aus gezogenem Rohr hergestellt ist.

7. Messvorrichtung nach einem der vorhergehenden Ansprüche, dadurch gekennzeichnet, dass die Steigung des Innenkonus (5; 25) höchstens 1 : 5 beträgt.

8. Messvorrichtung nach einem der vorhergehenden Ansprüche, dadurch gekennzeichnet, dass die Hülse (4) mit wenigstens über die Länge des Innenkonus (5) sich erstreckenden Längsschlitzen (21) versehen ist.

9. Messvorrichtung nach einem der vorhergehenden Ansprüche, dadurch gekennzeichnet, dass die Hülse (4; 24) zur axialen Lagerung der Schraubeinrichtung (15) an wenigstens einer der beiden Lagerstellen eine Ringnut aufweist, in die ein Sprengring (17) eingesetzt ist.

10. Messvorrichtung nach Anspruch 9, dadurch gekennzeichnet, dass die andere Lagerstelle durch eine Schulter (26) an der Hülse (24) gebildet ist.

11. Messvorrichtung nach einem der vorhergehenden Ansprüche, dadurch gekennzeichnet, dass die Schraubeinrichtung (15) aus einem Material besteht, dessen Elastizitätsmodul geringer ist als der des Wandlers (6).

12. Messvorrichtung nach einem der vorhergehenden Ansprüche, dadurch gekennzeichnet, dass der Radius der Kugelkalotte (11) an den Druckkörpern (10) etwa gleich gross ist wie der halbe Durchmesser des Innenkonus (15; 25) der Hülse an der engsten Stelle.

13. Messvorrichtung nach Anspruch 8, dadurch gekennzeichnet, dass die Breite der Längsschlitze (21) in der Hülse klein ist im Verhältnis zum Radius der Kugelkalotten (11).

14. Messvorrichtung nach einem der vorhergehenden Ansprüche dadurch gekennzeichnet, dass der elektromechanische Wandler (6) ein hermetisch abgeschlossenes Gehäuse (7) aufweist.

15. Messvorrichtung nach einem der vorhergehenden Ansprüche dadurch gekennzeichnet, dass sie Mittel zur elektrischen Isolierung des elektromechanischen Wandlers gegen Masse aufweist.

16. Messvorrichtung nach Anspruch 15, dadurch gekennzeichnet, dass die zylindrische Hülse (4; 24) wenigstens an ihrer Aussenwandung aus elektrisch nicht leitendem Material besteht.

17. Messvorrichtung nach Anspruch 15, dadurch gekennzeichnet, dass die Kugelkalotten (11) auf die Druckkörper (10) des Wandlers (6) aufgesetzt sind und entweder aus elektrisch nicht leitendem Material bestehen oder durch einen elektrisch nicht leitenden Kleber mit den Druckkörpern verbunden sind, und dass die Schraubeinrichtung (15) wenigstens an ihrer Aussenseite aus einem elektrisch nicht leitenden Material besteht.

18. Messvorrichtung nach einem der vorhergehenden Ansprüche dadurch gekennzeichnet, dass die Schraubeinrichtung (15) einen koaxial zylindrischen Ansatz (18) aufweist, der über das äussere Axiallager (17) der Schraubeinrichtung hinausragt und der einen radialen Zapfen (19) trägt, an den ein Hilfswerkzeug zum Verschieben der Messvorrichtung (1) in axialer Richtung und zum Verdrehen der Schraubeinrichtung (15) ansetzbar ist, und dass am äusseren Ende der Schraubspindel (13) wenigstens eine plane Angriffsfläche (14) vorgesehen ist, die das Ansetzen eines Hilfswerkzeuges zum Fixieren der Drehwinkellage der Schraubspindel und damit des Wandlers ermöglicht.

19. Messvorrichtung nach einem der vorhergehenden Ansprüche dadurch gekennzeichnet, dass die Hülse (24) an ihrem dem Innenkonus (25) abgewandten Ende Mittel, z.B. einen radialen Zapfen (27) aufweist, an denen ein Hilfswerkzeug zum Verschieben der Messvorrichtung (23) in axialer Richtung und zum Fixieren der Drehwinkellage des Wandlers (6) ansetzbar ist, wobei die Schraubspindel (13) gegen ein Verdrehen gegenüber der Hülse (24) gesichert ist, und dass an der Schraubeinrichtung (15) wenigstens eine plane Angriffsfläche (20) vorgesehen ist, die das Ansetzen eines Hilfswerkzeuges zum Verdrehen der Schraubeinrichtung ermöglicht.

20. Messvorrichtung nach einem der vorhergehenden Ansprüche dadurch gekennzeichnet, dass die elektrischen Funktionen mindestens teilweise im Gehäuse (7) und/oder Ansatzrohr (8) integriert sind.

**Claims**

1. A measuring device (1, 23) with an electromechanical transducer (6) for measuring the actions of force in a mechanically loaded machine component (3) or similar, insertable in a hole (2) in the machine component (3) and braceable non-positively in this, at the same time preloading the transducer (6), characterized by the device (1, 23) having an essentially cylindrical sleeve (4, 24) as its outer enclosure with an inside taper (5, 25) at one end, by the transducer (6) being joined to a coaxial screw spindle (13) in the sleeve, by a screw device (15) engaging the screw spindle to move it axially, held rotatable but axially immovable inside the sleeve, and by the transducer having diametrically opposed force introduction elements (10, 11) which can be engaged directly with the inside taper (5, 25) of the sleeve to expand and brace this.

2. A measuring device according to Claim 1, characterized by an arrangement (14, 17) for holding the device in a defined axial position and/or angle of rotation in relation to the hole, and an arrangement (19, 20) for actuating the screw device (15), these arrangements not exceeding essentially the radial dimension of the sleeve (4, 24).

3. A measuring device according to Claims 1 or 2, characterized by each force introduction element comprising a pressure-sustaining body (10) projecting essentially radially from the transducer (6) and having an essentially hemispherical face (11) engaging the inside taper (5, 25) of the sleeve (4, 24).

4. A measuring device according to one of the foregoing claims, characterized by its having a piezoelectric transducer.

5. A measuring device according to one of the foregoing claims, characterized by its having an electromechanical, in particular piezoelectric transducer arranged for detecting separately both compressive and tangentially acting shear forces.

6. A measuring device according to one of the foregoing claims, characterized by the sleeve (4; 24) being produced from drawn tubing.

7. A measuring device according to one of the foregoing claims, characterized by the pitch of the inside taper (5, 25) being at least 1 : 5.

8. A measuring device according to one of the foregoing claims, characterized by the sleeve (4) having longitudinal slots (21) extending at least the length of the inside taper (5).

9. A measuring device according to one of the foregoing claims, characterized by the sleeve (4; 24) having an annular groove with a snap ring (17) inserted in it at one at least of the two axial supports of the screw device (15).

10. A measuring device according to Claim 9, characterized by the other support consisting of a shoulder (26) on the sleeve (24).

11. A measuring device according to one of the foregoing claims, characterized by the screw device (15) consisting of a material with a modulus of elasticity lower than that of the transducer (6).

12. A measuring device according to one of the foregoing claims, characterized by the radius of the hemispheres (11) on the pressure-sustaining bodies (10) being roughly equal to half the diameter of the inside taper (15; 25) of the sleeve at the narrowest point.

13. A measuring device according to Claim 8, characterized by the width of the longitudinal slots (21) in the sleeve being small in relation to the radius of the hemispheres (11).

14. A measuring device according to one of the foregoing claims, characterized by the electromechanical transducer (6) having a hermetically sealed housing (7).

15. A measuring device according to one of the foregoing claims, characterized by the provision of means for insulating the electromechanical transducer electrically against ground.

16. A measuring device according to Claim 15, characterized by the cylindrical sleeve (4; 24) consisting of electrically nonconductive material on its outside wall at least.

17. A measuring device according to Claim 15, characterized by the hemispheres (11) being joined separately to the pressure-sustaining bodies (10) of the transducer and either consisting of electrically nonconductive material or being bonded to the pressure-sustaining bodies with an electrically nonconductive adhesive, and by the screw device (15) consisting of electrically nonconductive material on its outside at least.

18. A measuring device according to one of the foregoing claims, characterized by the screw device (15) having a coaxial cylindrical extension (18) projecting beyond the outer axial support (17) of the screw device and bearing a radial pin (19), to which a tool may be applied for displacing the measuring device (1) axially and for turning the screw device (1) axially and for turning the screw device (15), and by the provision on the outer end of the screw spindle (13) of at least one plane contact surface (14), enabling a tool to be applied for fixing the angle of rotation of the screw spindle and thus of the transducer.

19. A measuring device according to one of the foregoing claims, characterized by the sleeve (24) having on its inside taper (25) means, such as a radial pin (27), for applying a tool to displace the measuring device (23) axially and to fix the angle of rotation of the transducer (6), whereby the screw spindle (13) is secured against turning in relation to the sleeve (24), and by the provision on the screw device (15) of at least one plane contact surface (20), enabling a tool to be applied for turning the screw device.

20. A measuring device according to one of the foregoing claims, characterized by the electrical functions being integrated partly at least in the housing (7) and/or extension tube (8).

**Revendications**

1. Dispositif de mesure avec un convertisseur électro-mécanique pour la mesure des effets du force dans un élément de machine sollicité mécaniquement ou de façon similaire, qui peut être mis en œuvre dans un alésage de l'élément de machine et y être serré de façon à reprendre tous les efforts sous précontrainte simultanée du convertisseur, caractérisé par le fait que le dispositif (1, 23) possède comme enveloppe extérieure pour l'essentiel un fourreau (4, 24) muni à l'une de ses extrémités d'un cône intérieur (5, 25), que le convertisseur (6) est relié à une vis (13) aménagée concentriquement au fourreau, qu'un dispositif de vissage (15) en prise avec la vis (13) pour assurer son déplacement axial est maintenu fixe axialement mais libre en rotation à l'intérieur du fourreau et que le convertisseur possède des pions d'introduction des efforts (10, 11) diamétralement opposés pouvant être amenés en contact avec le cône intérieur (5, 25) du fourreau.

2. Dispositif de mesure selon revendication 1, caractérisé par le fait qu'un système (14, 17) de maintien du dispositif dans une position angulaire et/ou axiale donnée par rapport à l'alésage et qu'un système (19, 20) permettant d'actionner le dispositif de vissage (15) sont prévus, ceux-ci ne dépassant pas, pour l'essentiel, la dimension radiale du fourreau (4, 24).

3. Dispositif de mesure selon revendications de brêvet 1 et 2, caractérisé par le fait que chaque élément d'introduction de force comprend une pièce d'appui (10) généralement radialement distante du convertisseur (6) avec une face d'appui (11) ayant essentiellement la forme d'une calotte sphérique qui est en contact avec le cône interne (5, 25) du fourreau (4, 24).

4. Dispositif de mesure selon l'une des revendications de brevet ci-dessus mentionnés caractérisé par le fait qu'il possède un convertisseur pièzo-électrique.

5. Dispositif de mesure selon l'une des revendications de brêvet ci-dessus caractérisé par le fait qu'il possède un convertisseur électro-mécanique, essentiellement piézo-électrique qui est aménagé pour la saisie séparée tant des forces de pression que des forces de cisaillement dirigées tangentiellement.

6. Dispositif de mesure selon l'une des revendications de brevêt ci-dessus caractérisé par le fait que le fourreau (4, 24) est réalisé à partir d'un tube étiré à froid.

7. Dispositif de mesure selon l'une des revendications de brevêt ci-dessus caractérisé par le fait que la pente du cône intérieur (5, 25) est au maximum de 1 : 5.

8. Dispositif de mesure selon l'une des revendications de brevêt ci-dessus caractérisé par le fait que le fourreau (4) est muni de fentes longitudinales (21) s'étendant au moins sur la longueur du cône intérieur (5).

9. Dispositif de mesure selon l'une des revendications de brevêt ci-dessus caractérisé par le fait que le fourreau (4, 24) destiné au positionnement axial du système de vissage (15) possède au moins à l'une de ses extrémités une gorge dans laquelle est placé un circlips (17).

10. Dispositif de mesure selon revendication de brêvet 9, caractérisé par le fait que l'autre palier est réalisé par un épaulement (26) de la douille (24).

11. Dispositif de mesure selon l'une des revendications de brevêt ci-dessus caractérisé par le fait que la douille (15) du système de vissage est réalisée en une matière dont l'élasticité est inférieure à celle de la matière du convertisseur (6).

12. Dispositif de mesure selon l'une des revendications de brevêt ci-dessus caractérisé par le fait que le rayon de la calotte sphérique (11) des pions d'appui (10) est à peu près aussi grand que le demi-rayon du cône intérieur (15, 25) du fourreau dans sa section la plus étroite.

13. Dispositif de mesure selon la revendication 8 caractérisé par le fait que la largeur des fentes longitudinales (21) du fourreau est faible par rapport au rayon des calottes sphériques (11).

14. Dispositif de mesure selon l'une des revendications de brevêt ci-dessus caractérisé par le fait que le convertisseur électro-mécanique (6) possède un boîtier (7) hermétiquement clos.

15. Dispositif de mesure selon l'une des revendications de brevêt ci-dessus caractérisé par le fait qu'il possède des moyens d'isolation électrique du convertisseur par rapport à la masse.

16. Dispositif de mesure selon revendication 15, caractérisé par le fait qu'au moins la partie extérieure du fourreau (4, 24) est réalisée en un matériau non conducteur électriquement.

17. Dispositif de mesure selon revendication 15, caractérisé par le fait que les calottes sphériques (11) sont fixées sur les pions (10) du convertisseur (6) et sont, soit réalisées dans un matériau électriquement non conducteur, soit collées sur les pions au moyen d'une colle électriquement non conductrice et que le dispositif de vissage (15) est réalisé au moins en sa partie extérieure en un matériau non conducteur.

18. Dispositif de mesure selon l'une des revendications de brevêt ci-dessus caractérisé par le fait que le système de vissage (15) possède un fût cylindrique (18) qui dépasse au palier axial extérieur (17) et qui est muni d'un pion radial (19) sur lequel peut être engagé un outillage permettant de déplacer axialement le dispositif de mesure (1) et de faire pivoter le dispositif de vissage (15) et qu'à l'extrémité externe de la vis (13) au moins un méplat (14) est prévu qui permette d'engager en outil pour fixer la position angulaire de la vis et donc du convertisseur.

19. Dispositif de mesure selon l'une des revendications de brevêt ci-dessus caractérisé par le fait que la douille (24) possède à son extrémité dirigée vers le cône intérieur (25) un dispositif p.ex. un téton radial (27) sur lequel peut s'engager un outillage auxiliaire permettant de déplacer le dispositif de mesure (23) dans le sens axial et de fixer la position par rapport à la douille (24) et que le dispositif de vissage (15) possède au moins une surface d'appui plane (20) permettant de mettre en place un outil auxiliaire permettant de faire pivoter le dispositif de vissage.

20. Dispositif de mesure selon l'une des revendications de brevêt ci-dessus caractérisé par le fait que les fonctions électriques sont au moins partiellement intégrées dans le boîtier (7) et/ou dans le tube (8).

FIG.1

FIG.2

FIG.3

FIG.4